# EUROPEAN PATENT SPECIFICATION

(11) **EP 3 262 003 B1**
(45) Date of publication and mention of the grant of the patent: **15.07.2020**
(21) Application number: 15710663.4
(22) Date of filing: 27.02.2015
(51) Int. Cl.: C03C 15/00, C03C 23/00

(54) **METHODS OF FABRICATING CHANNELS IN GLASS ARTICLES BY LASER DAMAGE AND ETCHING AND ARTICLES MADE THEREFROM**
VERFAHREN ZUR HERSTELLUNG VON KANÄLEN IN GLASARTIKELN DURCH LASERSCHADEN UND -ÄTZEN UND DARAUS HERGESTELLTE ARTIKEL
PROCÉDÉS DE FABRICATION DE CANAUX DANS DES ARTICLES EN VERRE PAR DÉTÉRIORATION ET GRAVURE LASER ET ARTICLES FABRIQUÉS À L'AIDE DESDITS PROCÉDÉS

(43) Date of publication of application: 03.01.2018
(73) Proprietor: Corning Incorporated, Corning, New York 14831 (US)
(72) Inventor: OLIVER, James Guy, Horseheads, New York 14845 (US); WANG, Qing Ya, Changchun 130012 (CN); WEN, Bin, Shanghai 200123 (CN); ZOU, Yuan-Yuan, Yantai Shandong 264000 (CN)
(74) Representative: Elkington and Fife LLP
(86) International application number: PCT/US2015/017986
(87) International publication number: WO 2016/137488

(56) References cited:
- EP-A1- 1 319 335
- EP-A1- 1 990 125
- CN-A- 103 442 544
- JP-A- 2007 069 216
- US-A1- 2014 147 624

## Description

### BACKGROUND

### Field

The present specification generally relates to methods of fabricating channels in glass articles and, more particularly, methods of fabricating channels in glass articles by creating channels through laser damage and subsequently etching the laser damage regions.

### Technical Background

Glass articles are used in a variety of industries, including the electronics industry where glass is used to cover displays devices. Examples of such display devices include Liquid Crystal Displays and Light Emitting Diode displays, for example, computer monitors, televisions, and handheld devices. Three-dimensional glass articles are increasingly being used for their aesthetically pleasing appearance and tactile feel. However, meeting low dimensional tolerances, particularly with shaped glass, is challenging because the glass has dimensional deformation during reforming, annealing, and chemical strengthening. Additionally, traditional computer numerical control ("CNC") machining methods used to create features in glass articles, such as channels, if performed prior to reforming, will cause non-uniform heating during glass reforming that may lead to waviness of the surface of the glass article and undesired deformation.
JP 2007-69216A relates to a method for creating grooves in an inorganic material.
US 2014/0147624 A1 relates to a method for forming glass articles including forming laser damage regions in the glass article and etching the glass article.

### SUMMARY

The present invention relates to a method of forming a glass article. The method for forming the glass article comprises providing a glass substrate sheet, and translating a pulsed laser beam on the glass substrate sheet. The pulsed laser forms a laser damage region extending from a surface of the glass substrate sheet to a mid-point of the glass substrate sheet. The method further comprises contacting the glass substrate sheet with an etchant solution, and after the contacting of the glass substrate sheet with the etchant solution, the laser damage regions form channels having width and depth dimensions of less than 150 µm. A channel is a depression in one surface of the glass substrate sheet that does not penetrate to the other surface of the glass substrate sheet. In the case where the glass substrate sheet is strengthened before the pulsed laser beam is translated on the glass substrate sheet, the pulsed laser has a power of from 0.1W to 0.4W. In the case where the glass substrate sheet is strengthened after the pulsed laser beam is translated on the glass substrate sheet, the pulsed laser has a power of from 0.4W to 0.6W.

According to an aspect of the disclosure, a glass article is provided. The glass article comprises a first surface, a second surface, and at least one channel extending from the first surface to point between the first surface and the second surface. The at least one channel has width and height dimensions less than about 150 µm.

It should be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 schematically depicts a laser system for generating laser damage regions within a flat glass substrate sheet according to one or more embodiments described and illustrated herein;
FIG. 2 schematically depicts a top perspective view of a flat glass substrate sheet and a focused, pulsed laser beam according to one or more embodiments described and illustrated herein;
FIG. 3 schematically depicts a side view of a laser damage region within a flat glass substrate sheet according to one or more embodiments described and illustrated herein;
FIG. 4A schematically depicts a separate glass wafer and an interposer according to one or more embodiments described and illustrated herein;
FIG. 4B schematically depicts a combined glass wafer and an interposer according to one or more embodiments described and illustrated herein;
FIG. 5 schematically depicts a magnified view of an interposer according to one or more embodiments described and illustrated herein;
FIG. 6 graphically depicts the strength of interposers with and without channels according to one or more embodiments described and illustrated herein; and
FIG. 7 is a flowchart describing a method of fabricating a shaped glass article according to one or more embodiments described and illustrated herein.

### DETAILED DESCRIPTION

Reference will now be made in detail to embodiments of methods of making glass articles from a flat glass substrate sheet using laser damage and chemical etching processes to form features in the glass article. Generally, laser damage regions are formed within a flat glass substrate sheet around features (e.g., channels, slots, and the like) of the desired glass article. According to embodiments, the laser damage regions are etched by subjecting the glass article or glass substrate sheet to an etchant solution, such as by immersion or spraying. Prior to etching the glass substrate sheet and after forming the laser damage regions, the flat glass substrate sheet may, in embodiments, be reformed to achieve the desired three-dimensional shape of the one or more glass articles. Thus, in some embodiments, the laser damage regions are created with an initial geometry that precompensates for the changing shape of the flat glass substrate sheet during the reforming, etching, and/or strengthening processes such that laser damage regions have a desired geometry after the reforming, etching, and/or strengthening processes. In embodiments, the glass substrate sheet is then subjected to an etchant solution to remove flakes from the features and, in embodiments, smooth edges of the features. In some embodiments, the glass articles or glass substrate sheet on which features have been formed may then be subjected to a strengthening process, such as an ion-exchange chemical strengthening process. Various methods of forming features in a flat glass substrate sheet will be described in more detail herein with specific reference to the appended drawings. Whenever possible, the same reference numerals will be used throughout the drawings to refer to the same or like parts. However, it should be understood that features may be formed in glass articles with multiple dimensions and differing geometries using the methods described below.

Although the methods described herein may be used to form features glass articles having a variety of compositions, in some embodiments, the flat glass substrate sheet comprises an alkali aluminosilicate glass. In one embodiment, the alkali aluminosilicate glass comprises: from about 64 mol% to about 68 mol% SiO₂; from about 12 mol% to about 16 mol% Na₂O; from about 8 mol% to about 12 mol% Al₂O₃; from 0 mol% to about 3 mol% B₂O₃; from about 2 mol% to about 5 mol% K₂O; from about 4 mol% to about 6 mol% MgO; and from 0 mol% to about 5 mol% CaO; wherein: 66 mol% ≤ SiO₂ + B₂O₃ + CaO ≤ 69 mol%; Na₂O + K₂O + B₂O₃ + MgO + CaO + SrO > 10 mol%; 5 mol% ≤ MgO + CaO + SrO ≤ 8 mol%; (Na₂O + B₂O₃) - Al₂O₃ ≥ 2 mol%; 2 mol% ≤ Na₂O - Al₂O₃ ≤ 6 mol%; and 4 mol% ≤ (Na₂O + K₂O) - Al₂O₃ ≤ 10 mol%.

In another embodiment, the alkali aluminosilicate glass comprises: from about 60 mol% to about 70 mol% SiO₂; from about 6 mol% to about 14 mol% Al₂O₃; from 0 mol% to about 15 mol% B₂O₃; from 0 mol% to about 15 mol% Li₂O; from 0 mol% to about 20 mol% Na₂O; from 0 mol% to about 10 mol% K₂O; from 0 mol% to about 8 mol% MgO; from 0 mol% to about 10 mol% CaO; from 0 mol% to about 5 mol% ZrO₂; from 0 mol% to about 1 mol% SnO₂; from 0 mol% to about 1 mol% CeO₂; less than about 50 ppm As₂O₃; and less than about 50 ppm Sb₂O₃; wherein 12 mol% ≤ Li₂O + Na₂O + K₂O ≤ 20 mol% and 0 mol% ≤ MgO + CaO ≤ 10 mol%.

In another embodiment, the alkali aluminosilicate glass comprises SiO₂ and Na₂O, wherein the glass has a temperature T₃₅ₖₚ at which the glass has a viscosity of 35 kilo poise (kpoise), wherein the temperature T_{breakdown} at which zircon breaks down to form ZrO₂ and SiO₂ is greater than T₃₅ₖₚ. In some embodiments, the alkali aluminosilicate glass comprises: from about 61 mol % to about 75 mol% SiO₂; from about 7 mol % to about 15 mol% Al₂O₃; from 0 mol% to about 12 mol% B₂O₃; from about 9 mol % to about 21 mol% Na₂O; from 0 mol % to about 4 mol% K₂O; from 0 mol% to about 7 mol% MgO; and 0 mol% to about 3 mol% CaO.

In another embodiment, the alkali aluminosilicate glass comprises at least 50 mol% SiO₂ and at least one modifier selected from the group consisting of alkali metal oxides, wherein [(Al₂O₃ (mol %) + B₂O₃ (mol%))/(∑ alkali metal modifiers (mol%))] > 1. In some embodiments, the alkali aluminosilicate glass comprises: from 50 mol% to about 72 mol% SiO₂; from about 9 mol% to about 17 mol% Al₂O₃; from about 2 mol% to about 12 mol% B₂O₃; from about 8 mol% to about 16 mol% Na₂O; and from 0 mol% to about 4 mol% K₂O.

In another embodiment, the alkali aluminosilicate glass comprises SiO₂ and at least one modifier selected from the group consisting of alkaline metal oxides. In some embodiments, the alkaline metal oxide modifiers may be selected from the group consisting of MgO, CaO, SrO, BaO and mixtures thereof. Without being bound to any particular theory, it is believed that the alkaline earth metals are less soluble in the etchant (e.g., HF) than other modifiers and, thus, glasses containing alkaline earth metals have slow surface etch rates, which may lead to decreased waviness of a finished glass article. In some embodiments, the alkali aluminosilicate glass comprises from about 5 mol% to about 14 mol% alkaline metal oxides, such as from about 8 mol% to about 12 mol% alkaline earth metal oxides. In some embodiments, the alkali aluminosilicate glass comprises: from 50 mol% to about 72 mol% SiO₂; from about 9 mol% to about 17 mol% Al₂O₃; from about 2 mol% to about 12 mol% B₂O₃; from about 8 mol% to about 16 mol% Na₂O; from 0 mol% to about 4 mol% K₂O; and from about 5 mol% to about 14 mol% MgO + CaO + SrO.

In another embodiment, the alkali aluminosilicate glass comprises SiO₂, Al₂O₃, P₂O₅, and at least one alkali metal oxide (R₂O), wherein 0.75 ≤ [(P₂O₅(mol%) + R₂O(mol%))/ M₂O₃ (mol%)] ≤ 1.2, where M₂O₃ = Al₂O₃ + B₂O₃. In some embodiments, the alkali aluminosilicate glass comprises: from about 40 mol% to about 70 mol% SiO₂; from 0 mol% to about 28 mol% B₂O₃; from 0 mol% to about 28 mol% Al₂O₃; from about 1 mol% to about 14 mol% P₂O₅; and from about 12 mol% to about 16 mol% R₂O; and, in certain embodiments, from about 40 to about 64 mol% SiO₂; from 0 mol% to about 8 mol% B₂O₃; from about 16 mol% to about 28 mol% Al₂O₃; from about 2 mol% to about 12% P₂O₅; and from about 12 mol% to about 16 mol% R₂O.

In still other embodiments, the alkali aluminosilicate glass comprises at least about 4 mol% P₂O₅, wherein (M₂O₃ (mol%)/RₓO (mol%)) < 1, wherein M₂O₃ = Al₂O₃ + B₂O₃, and wherein RₓO is the sum of monovalent and divalent cation oxides present in the alkali aluminosilicate glass. In some embodiments, the monovalent and divalent cation oxides are selected from the group consisting of Li₂O, Na₂O, K₂O, Rb₂O, Cs₂O, MgO, CaO, SrO, BaO, and ZnO. In some embodiments, the glass comprises 0 mol% B₂O₃.

In still another embodiment, the alkali aluminosilicate glass comprises at least about 50 mol% SiO₂ and at least about 11 mol% Na₂O, and the compressive stress is at least about 900 MPa. In some embodiments, the glass further comprises Al₂O₃ and at least one of B₂O₃, K₂O, MgO and ZnO, wherein -340 + 27.1·Al₂O₃ - 28.7·B₂O₃ + 15.6·Na₂O - 61.4·K₂O + 8.1·(MgO + ZnO) ≥ 0 mol%. In particular embodiments, the glass comprises: from about 7 mol% to about 26 mol% Al₂O₃; from 0 mol% to about 9 mol% B₂O₃; from about 11 mol% to about 25 mol% Na₂O; from 0 mol% to about 2.5 mol% K₂O; from 0 mol% to about 8.5 mol% MgO; and from 0 mol% to about 1.5 mol% CaO.

In some embodiments, the alkali aluminosilicate glasses described hereinabove are substantially free of (i.e., contain 0 mol% of) at least one of lithium, boron, barium, strontium, bismuth, antimony, and arsenic. In other embodiments, the alkali aluminosilicate glass is substantially free of lithium, boron, barium, strontium, bismuth, antimony, and arsenic.

In some embodiments, the alkali aluminosilicate glasses described hereinabove are down-drawable by conventional processes, such as slot-drawing, fusion drawing, re-drawing, and the like, and has a liquidus viscosity of at least 130 kilopoise.

It should be understood that although specific glass compositions are described above, the methods and glass articles of embodiments may be made from many different types of glass and are not limited to the glass compositions described hereinabove.

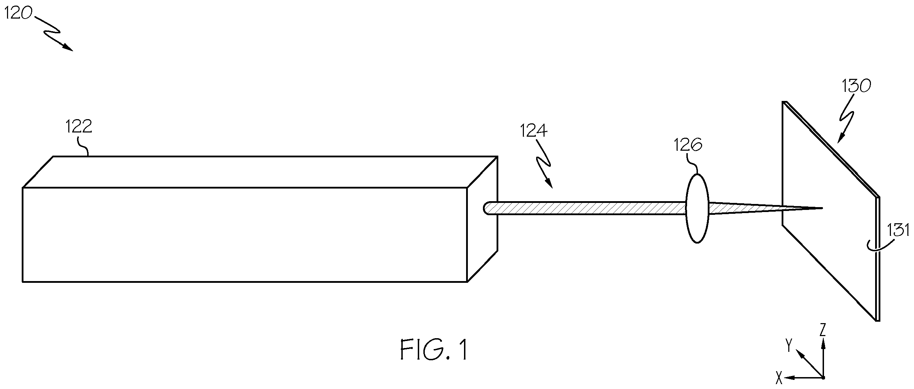

Referring initially to FIG. 1, a system 120 for inducing laser damage regions into a flat glass substrate sheet 130 is schematically depicted. A laser source 122 is provided that is operable to generate a pulsed laser beam 124 that is focused by coupling optics 126 and directed toward the flat glass substrate sheet 130. The laser source 122 may be any laser source capable of inducing the laser damage regions. As an example and not a limitation, the laser source 122 generates a pulsed ultraviolet ("UV") pulsed laser beam 124 (e.g., about 355 nm in wavelength) that is operated in picosecond or nanosecond pulses.

The coupling optics 126 may be configured as one or more lenses that focus the pulsed laser beam 124 into a focused laser beam having a focal point at a desired location with respect to the flat glass substrate sheet 130. As described in more detail below, in some embodiments, the focus of the coupling optics 126 may be controllable to form a laser damage region within the flat glass substrate sheet 130.

The pulsed laser beam 124 may be configured to be scanned on the flat glass substrate sheet 130 to form the desired laser damage region. In some embodiments, the flat glass substrate sheet 130 may be coupled to a computer-controlled XYZ stage (not shown) such that the flat glass substrate sheet is translated with respect to the pulsed laser beam 124. Additionally, in embodiments, a beam splitter (not shown) may also be provided to split a single laser beam 124 generated by the laser source 122 into a plurality of laser beams for simultaneously forming a plurality of laser damage regions within the flat glass substrate sheet 130.

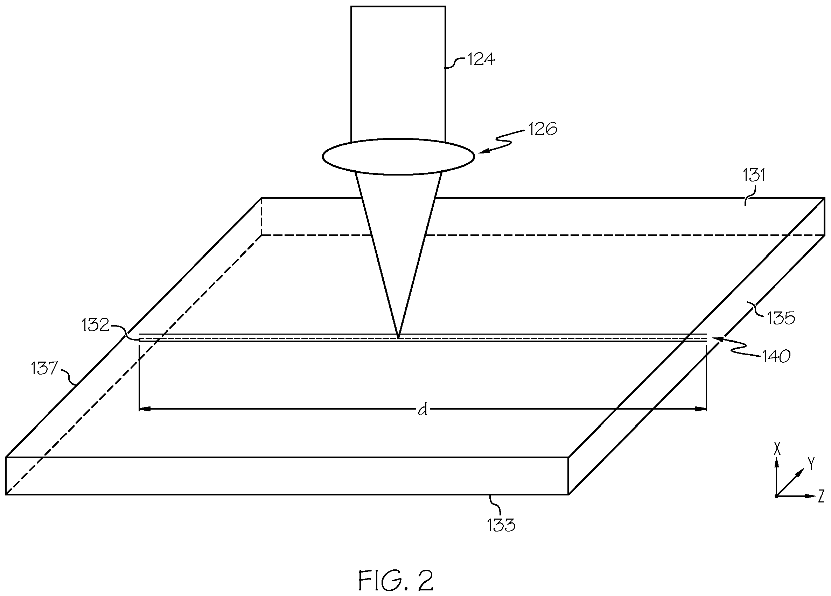

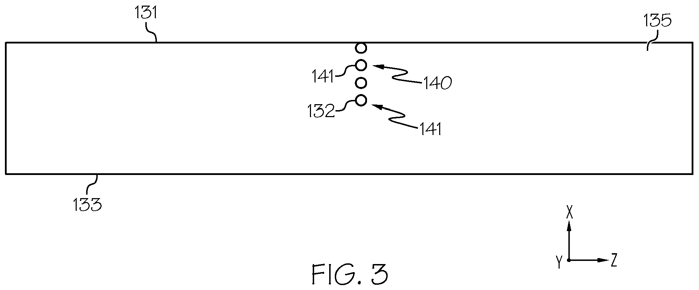

Referring now to FIGS. 2 and 3, a straight laser damage region 140 within a flat glass substrate sheet is depicted. FIG. 2 depicts a perspective view of the flat glass substrate sheet 130 and a pulsed laser beam 124 being focused by coupling optics 126, while FIG. 3 depicts a side view of the flat glass substrate sheet 130. The laser damage region 140 is defined by a plurality of individual laser damage lines 141 that are located at and between a first surface 131 and a second surface 133 at different depths within a bulk of the flat glass substrate sheet 130. For example, in embodiments, the laser damage lines may extend from the first surface 131 to a mid-point 132 between the first surface 131 and the second surface 133. As used herein, a mid-point refers to any position between the first surface 131 and the second surface 133 and is not limited to the geometrical middle between the first and second surfaces. As shown in FIGS. 2 and 3, the individual laser damage lines 141 are vertically arranged on the x-axis. Each individual laser damage line 141 may be formed by one or more passes of the pulsed laser beam 124. For example, the first laser damage line 141 may be formed by setting the focal point of the pulsed laser beam 124 at a distance above the second surface 133 (i.e., the underside surface) that coincides with the desired depth of the feature, and near a first edge 135 of the flat glass substrate sheet 130. The pulsed laser beam 124 may then be translated (and/or the flat glass substrate sheet 130 may be translated relative to the laser) over the flat glass substrate sheet 130 at a distance d toward a second edge 137. Then, the position of the focal point of the pulsed laser beam 124 is incrementally moved toward the first surface 131 of the flat glass substrate sheet 130, either by controlling the coupling optics 126, or by moving the flat glass substrate sheet 130. The pulsed laser beam 124 is then translated over the glass substrate sheet again (and/or the flat glass substrate sheet 130 may again be translated relative to the laser) either from the second edge 137 toward the first edge 135, or from the first edge 135 toward the second edge 137. The process may be repeated until pulsed laser beam 124 traverses at, or just below, first surface 131 (i.e., the upper surface), thereby completing the formation of the laser damage region 140.

Microcracks formed by the individual laser damage lines 141 may extend to adjacent individual laser damage lines 141, thereby forming a microcrack network. To prevent uncontrollable splitting of the flat glass substrate sheet 130 during the laser irradiation process, in some embodiments the individual laser damage lines 141 do not contact the edges of the glass substrate sheet (e.g., the first and second edges 135, 137). For example, the ends of the individual damage lines 141 may be offset from the edges of the flat glass substrate sheet 130 by a few millimeters or, in some embodiments, by a few hundred micrometers. Further, the pulsed laser beam 124 should be operated such that it does not form grooves within the first and second surfaces 131, 133 of the flat glass substrate sheet 130. The pitch between the individual laser damage lines 141 may be set such that the flat glass substrate sheet 130 does not prematurely crack along the laser damage region 140. In some embodiments, the pitch between the individual laser damage lines 141 may be less than or equal to about 5.0 µm, such as from about 1.0 µm to about 4.0 µm, or from about 2.0 µm to about 3.0 µm.

In embodiments, the laser source may be operated at a repetition rate ranging from about 60 kHz to about 200 kHz, such as from about 70 kHz to about 190 kHz. In other embodiments, the laser source may be operated at a repetition rate ranging from about 90 kHz to about 170 kHz, or from about 100 kHz to about 150 kHz. The output power of the laser source and the focusing conditions of the coupling optics should be such that the energy and intensity in the beam focus are at or slightly above damage threshold of the flat glass substrate sheet. In embodiments, the output power of the laser source may be from about 0.1 W to about 2.0 W, such as from about 0.5 W to about 2.0 W. In some embodiments, the output power of the laser source may be from about 0.75 W to about 1.5 W, such as from about 1.0 W to about 1.25 W.

Selective etching of the laser damage areas may be performed with glass substrate sheets having any glass thickness. It may be particularly advantageous for thinner glass substrate sheets (e.g., below 0.3 mm) of which computer numerical control ("CNC") and other mechanical processes have very low yields, and for features having small dimensions, such as the channels described herein.

Embodiments of the present disclosure remove glass flakes from the features and smooth the edges of the features by subjecting the laser-written glass substrate sheet to an etching process. In embodiments, etchant solution may be provided by a spray method wherein the etchant solution is sprayed onto the shaped glass substrate sheet, or by submerging the shaped glass substrate sheet into a bath of etchant solution. It should be understood that other processes for applying an etchant to the glass substrate sheet are also included herein.

In embodiments where the etchant is applied by spraying, spray nozzles may oscillate at speeds from about 0 oscillations per minute to about 40 oscillations per minute, such as from about 10 oscillations per minute to about 30 oscillations per minute. In other embodiments, the nozzles may oscillate at speeds from about 15 oscillations per minute to about 25 oscillations per minute. The pressure of the spray from the nozzles may be from about 0.5 bar to about 1.7 bar, such as from about 0.75 bar to about 1.5 bar. In some embodiments, the pressure of the spray from the spray nozzles may be from about 1.0 bar to about 1.25 bar. The oscillations and pressure of the spray from the spray nozzle may be used to ensure that clean features are formed in a glass article. For example, if the oscillations are too slow and/or the pressure of the spray from the nozzles is too low, the etchant may pool and cause imprecise features. However, when the oscillations are too fast and/or the pressure of the spray from the nozzle is too high, the glass substrate sheet may be etched too quickly causing lumps and imperfections to be formed on the glass surface and within the features.

Without being bound to any particular theory, it is believed that the etchant solution etches the laser damage regions because of the presence of microcracks within these laser damage regions. Both the laser damage regions and the non-damaged regions are etched simultaneously, but at different etch rates. The microcracks in the laser damage regions break chemical bonds, and provide pathways for etchant to penetrate deeper into the glass substrate sheet. Therefore, the etch rate at the laser damage regions is much faster than then non-damaged regions.

The etchant solution may comprise hydrofluoric acid as a primary etchant. Mineral acids, such as hydrochloric acid, sulfuric acid, and nitric acid, can assist the etch process and accelerate or decelerate the etch rate, as well as improve the surface quality of the glass article and reduce the formation of sludge. In some embodiments, sulfuric acid is used in combination with hydrofluoric acid in the etchant solution. In some embodiments, the etchant solution includes from about 2 mol/L to about 5 mol/L hydrofluoric acid and from about 0.5 mol/L to about 1.2 mol/L sulfuric acid, such as about 3 mol/L hydrofluoric acid and about 0.9 mol/L sulfuric acid

Further, a surfactant is believed to be beneficial to the etch process because it can improve transportation of the etchant to the laser damage regions, and to suspend the byproduct produced by the etchant process. As a non-limiting example, the surfactant may be DuPont FS-10. It should be understood that other surfactants may be utilized. In embodiments, the surfactant may be present in amounts less than about 0.1 wt%, such as less than about 0.05 wt%, or less than about 0.01 wt%.

In embodiments using an etchant solution bath, agitation of the etchant solution bath may improve the etch rate of the laser damage region. Both the etchant solution and the byproduct need to be constantly exchanged through the narrow channels of the microcracks within the laser damage regions. Agitation may accelerate the mass transfer inside the microcracks, and refresh that laser damage region surface for a continuous etching. Ultrasonic agitation influences the etch time, surface loss, and etch ratio. An effective agitation can increase the etch ratio between the laser damage regions and the non-damaged regions, which, in turn, may reduce the surface loss of the glass substrate sheet and reduce the cost of raw material. In some embodiments, the agitation is at a frequency below about 132 kHz, such as below about 125 kHz. In other embodiments, the agitation is at a frequency below about 100 kHz, or below about 80 kHz. Because the reduction of ultrasound frequency increases the power of each individual impulsion and the scrubbing effect, lower frequencies and higher amplitudes favor the fast exchange of etchant and byproduct, and improve the etch rate at the laser damage regions. In one embodiment, the ultrasonic agitation frequency is about 40 kHz.

It has been found that vertical movement of the etchant solution bath in combination with ultrasonic agitation does not improve the etch rate of the laser damage regions because typically the cylindrical crack network of the laser damage regions is perpendicular to the vertical movement of the bath. In the direction parallel to the cracks, the velocity of the vertical movement is near zero. As a result, the etch ratio and the final thickness of the glass substrate sheet may be much lower when vertical agitation is applied together with ultrasound agitation. Accordingly, in embodiments, the etching process does not include vertical agitation.

Higher etching solution temperatures generally increase the etch rate and, thus, higher etching solution temperatures may be used to decrease the duration of the etching process or, conversely, lower etching solution temperatures may be used to slow the etch rate, thereby allowing for more control over the dimensions of the features formed from the laser-damaged region. When the temperature of the etching solution is too high during a spray etching process, the acid may evaporate out of the etching solution during the spraying. Accordingly, in embodiments the temperature of the etching solution may be about 35 °C, such about 30 °C, or even about 25 °C. However, it should be understood that higher or lower temperatures may be used. In embodiments, the duration that the etchant solution is contacted to the glass substrate sheet may be from about 20 minutes to about 50 minutes, such as from about 25 minutes to about 45 minutes. In other embodiments, the duration that the etchant solution is contacted to the glass substrate sheet may be from about 30 minutes to about 40 minutes. In yet other embodiments, the duration that the etchant solution is contacted to the glass substrate sheet is about 50 minutes, such as about 45 minutes, or even about 40 minutes. The duration that the etchant solution is contacted to the glass is dependent on the necessary depth of the channel, etching concentrations and temperature of the etching spray.

To reduce surface losses of the glass substrate sheet by the etchant is to apply a coating that is resistant to the etching solution, such as pure HF or a mixture of HF and mineral acids, to one or more surface of the glass substrate sheet. In some embodiments, the acid-resistant coating is chosen so that the laser passes through the acid-resistant coating and creates laser damage in the underlying glass substrate sheet.

According to some embodiments, the acid-resistant coating may comprise ethylene acrylic acid and wax polymer emulsions dispersed in water. In some embodiments, the acid-resistant coating composition has from about 5 wt% to about 60 wt% solids/polymers, such as from about 15 wt% to about 46 wt% solids/polymers. The type and amount of wax polymer and ethylene acrylic acid may be modified according to the desired application. The acid-resistant coating may be applied to the glass substrate sheet by any suitable method. In some embodiments, the acid-resistant coating may be applied to the glass substrate sheet by dip coating, spray coating, spin coating, or slot coating. Once the acid-resistant coating has been applied to the glass substrate sheet, the acid-resistant coating may dried by heating. In some embodiments, the acid-resistant coating on the glass substrate sheet may be dried by heating the acid-resistant coating to temperatures of from about 150°C to about 190°C, such as about 170°C. In some embodiments, the duration of the drying step may be from about 10 minutes to about 40 minutes, such as from about 15 minutes to about 30 minutes. In other embodiments, the duration of the drying step may be about 20 minutes. Without being bound to any particular theory, it is believed that the heating in the drying step causes the wax polymer in the acid-resistant coating to bloom thereby providing a hydrophobic surface.

The thickness of the acid-resistant coating may be from about 1 µm to about 15 µm, such as from about 3 µm to about 8 µm. The acid-resistant coating may be removed by a solution of 3 wt% Semi-Klean with ultrasonics. Thin layers of the acid-resistant coating, such as less than about 10 µm, may be removed in boiling water.

As discussed above, in embodiments, the acid-resistant coating may be selected to allow the laser to pass through the acid-resistant coating and induce damage on the underlying glass substrate sheet. Thus, in embodiments, the acid-resistant coating may be applied before or after laser damage is induced. In one embodiment, the coating may be applied to a glass substrate sheet that has been strengthened, such as by ion exchange (which is discussed in detail below), and has a transparent conductive oxide coating, such as indium tin oxide. After the acid-resistant coating has been applied, laser damage may be induced to the underlying glass substrate sheet as discussed in detail above. The glass substrate sheet may then be etched and separated, and the acid-resistant coating may subsequently be removed. It should be understood that the acid-resistant coating may be applied at virtually any step in the process disclosed herein.

In some embodiments, the glass articles or glass substrate sheet are strengthened by a strengthening process. In some embodiments, strengthening process may occur before the features have been formed in the glass substrate sheet. In other embodiments, the strengthening process may occur after the features have been formed in the glass substrate sheet. The glass articles or glass substrate sheet may be chemically strengthened by an ion exchange process in which ions in the surface layer of the glass are replaced by larger ions having the same valence or oxidation state. In one particular embodiment, the ions in the surface layer and the larger ions are monovalent alkali metal cations, such as Li⁺ (when present in the glass), Na⁺, K⁺, Rb⁺, and Cs⁺. Thus, for example, Na⁺ present in the glass may be replaced with the larger K⁺ ions. Alternatively, monovalent cations in the surface layer may be replaced with monovalent cations other than alkali metal cations, such as Ag⁺, Ti⁺, Cu⁺, or the like.

The ion-exchange process creates a compressive stress at the surfaces of the glass article or glass substrate sheet. These compressive stresses extend beneath the surface of the glass article or glass substrate sheet to a certain depth, referred to as the depth of layer (DOL). The compressive stresses are balanced by a layer of tensile stresses (referred to as central tension) such that the net stress in the glass article or glass substrate sheet is zero. The formation of compressive stresses at the surface of the shaped glass article makes the glass strong and resistant to mechanical damage and, as such, mitigates failure of the shaped glass article for flaws which do not extend through the depth of layer.

In one embodiment, the glass article or glass substrate sheet is chemically strengthened by ion-exchange in which smaller sodium ions near the surface of the glass are exchanged with larger potassium ions when the glass article or glass substrate sheet is placed in an ion exchange bath. Replacement of the smaller sodium ions with the larger potassium ions causes a layer of compressive stress to develop in the surfaces of the glass article or glass substrate sheet. The compressive stress extends below the surfaces of the glass article or glass substrate sheet to a specified depth of layer (compressive surface layer). A compressive surface layer extends from the upper surface and the underside surface to the depth of layer. The compressive surface layer is balanced by the development of the internal tension layer at the center of the glass article or glass substrate sheet.

In the embodiments described herein, the compressive stress and depth of layer developed in the shaped glass article or glass substrate sheet by strengthening are sufficient to improve the damage tolerance of the shaped glass article while also facilitating further processing (such as by edge finishing) without risk of introducing flaws into the shaped glass article. In one embodiment, the compressive stress may be from about 200 MPa to about 1000 MPa. In another embodiment, the compressive stress may be from about 500 MPa to about 800 MPa. In yet another embodiment, the compressive stress may be from about 650 MPa to about 900 MPa. In one embodiment, the depth of layer may be from about 10 microns to about 80 microns. In another embodiment, the depth of layer may be from about 30 microns to about 60 microns. In yet another embodiment, the depth of layer may be from about 40 microns to about 60 microns.

In embodiments, the etch process may be used as the strengthening process when other forms of chemical strengthening, such as ion exchange, is not compatible with the glass composition.

For example, in glass articles or glass substrate sheets that cannot be strengthened by ion exchange because the glass is too thin, such as less than about 0.4 mm thick or even less than about 0.3 mm thick, or because the glass composition does not contain elements that are suitable for ion exchange, the etch process may be used to strengthen the glass article or glass substrate sheet. Without being bound to any particular theory, it is believed that the etching process blunts the tips of surface defects and in some cases eliminates or reduces the depth of surface defects that can weaken the glass article or glass substrate sheet. In embodiments, glasses formed by the laser damage and etching method disclosed above may have a failure rate of about 50% at forces of about 5 kg, or have a failure rate of less than about 20% at forces of about 4 kg.

In some embodiments, the glass substrate sheet is strengthened after the laser damage and etching steps (e.g., the glass article is strengthened). However, in other embodiments the glass substrate sheet may be strengthened before the laser damage and etching step.

The method further comprises chemically strengthening the glass sheet. In the case where the glass substrate sheet is strengthened after the laser damage and etching steps, the pulsed laser has a power from about 0.4 W to about 0.6 W.

In the case where the glass substrate sheet is strengthened before the laser damage and etching steps, and with reference again to FIG. 1, the laser source 122 may be operated at a repetition rate ranging from about 5 kHz to about 40 kHz, such as about 10 kHz. In embodiments, the output power of the laser source 122 may be at or below 0.6 W, such as from about 0.1 W to about 0.4 W, such as from about 0.15 W to about 0.3 W depending on the thickness and compressive stress of the glass substrate sheet. In some embodiments, the output power of the laser source 122 may be from about 0.2 W to about 0.25 W. Without being bound to any particular theory, it is believed that the laser creates multiple microcracks in the glass so that the glass volume increases in the laser damage region. This expansion may create laser-induced thermal effects that form additional compressive and tensile stresses superimposed in the existing stress pattern. This additional stress may be proportional to the laser power and may bring the glass closer to the frangibility limit. If the laser power is too low, it makes the laser damage too thin and it does not act as a cushion for high stresses in the surrounding glass. If the laser power is too high, it creates strong stresses that cannot be reduced by the laser damage. In both of these cases, the glass may break.

In either of the above embodiments (i.e., whether the glass substrate sheet is strengthened before or after the laser damage and etching), the translation speed of the pulsed laser beam may be between about 50 mm/s and about 2 m/s, in some embodiments. In other embodiments, the translation speed of the pulsed laser may be from about 50 mm/s to about 300 mm/s, such as about 250 mm/s.

It should be understood that laser parameters other than those described above may be used to form the laser damage regions. Laser pulse energies may vary between 5 µJ and several hundred microjoules depending on parameters such as glass properties, translation speed, laser repetition rate, and the coupling optics 126, which may have the numerical aperture (NA) in between of 0.15 and 0.3 or more, for example.

The laser damage and etching described above are used to form channels in a glass article. Channels, as used herein, are depressions made in one surface of the glass substrate sheet that do not penetrate through to the other, opposing surface of the glass substrate sheet. The channels may be formed in any shape or geometry. For example, in various embodiments, the channels may be straight lines, circular, rectangular, triangular, etc. Forming channels in the glass article can provide many advantages, such as, for example, by providing reservoirs for fluid overflow, allowing cooling fluids to flow through the glass article, or to provide aesthetic design elements to a glass article. However, if the dimensions of the channels (both depth and width) are too large, the strength of the glass articles may be compromised. Accordingly, in embodiments, channels with small dimensions are desired.

Conventional methods for forming channels in glass articles, such as a CNC method, have difficulty forming channels with small dimensions because they are limited by the physical attributes of the CNC machine. For example, the width of a channel in a glass article is limited by the dimensions of the scribing mechanism in a CNC, and as the scribing mechanism wears down, such as through repeated use, the dimensions of a channel that can be formed by the CNC machine are increased.

The channels formed by the laser damage and etching process disclosed herein have dimensions (width and depth) of less than about 150 µm, such as less than about 100 µm, or less than about 75 µm. In embodiments, the width of the channels may be from about 45 µm to about 125 µm, such as from about 40 µm to about 120 µm. In other embodiments, the width of the channels may be from about 45 µm to about 115 µm, such as from about 50 µm to about 110 µm. In yet other embodiments, the width of the channels may be from about 55 µm to about 105 µm, such as from about 60 µm to about 100 µm. Similarly, in embodiments, the depth of the channels may be from about 30 µm to about 100 µm, such as from about 35 µm to about 95 µm. In other embodiments, the depth of the channels may be from about 40 µm to about 90 µm, such as from about 45 µm to about 85 µm. It should be understood that the length of the channels may extend from one edge surface of the glass to another, opposite edge surface of the glass.

The laser damage and etch process described herein is also capable of providing the above dimensions (width and depth) within very tight tolerances. In embodiments, the width and depth of the channels have a tolerance of less than about ± 35 µm, such as less than about ± 30 µm. In other embodiments, the width and depth of the channels have a tolerance of less than about ± 25 µm, such as less than about ± 20 µm. Accordingly, in embodiments, the width and depth of the channels may have a tolerance of from about ± 10 µm to about ± 35 µm, such as from about ± 15 µm to about ± 30 µm. In other embodiments, the width and depth of the channels may have a tolerance of from about ± 20 µm to about ± 25 µm, such as from about ± 20 µm.

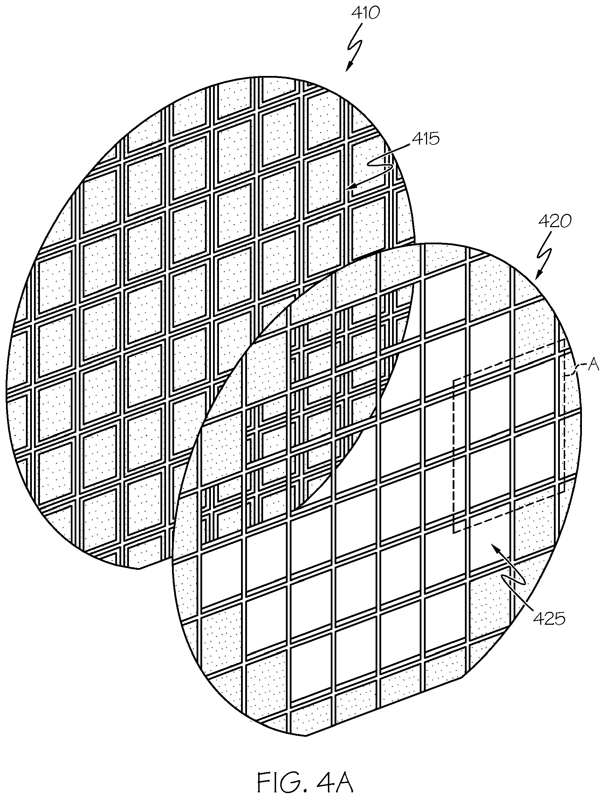

In embodiments, the glass article may be formed as an interposer, such as for use in a microelectromechanical system (MEMS). In such embodiments, and with reference to FIG. 4A, a glass wafer 410 may be formed by any suitable method and coated with an antireflective coating. It should be understood that although the glass wafer 410 depicted in FIG. 4A is circular, the glass wafer may have any shape. The antireflective coating is not particularly limited and, in embodiments, may be titanium nitride or niobium nitride, and may be applied by any suitable method, such as spray coating, dip coating, or manual application. The glass wafer 410 may also be patterned, for example, with a grid pattern 415, as shown in FIG. 4A. The grid pattern 415 may be formed from an adhesive, such as epoxy, urethane, and polyimides. To form an MEMS, an interposer 420 may be formed. As shown in FIG. 4A, the interposer 420 may have patterned through holes 425 formed by a CNC method or by a laser damage and etch method as disclosed in U.S. Patent Application Publication No. 2014/0147624. In embodiments where the through holes 425 are formed by a laser damage and etching process, the laser damage regions corresponding to the channels 427 may be formed in conjunction with forming the through holes 425. For example, in embodiments a laser may be used to cut through holes 425 in the glass substrate sheet and the same laser may be used to form laser damage regions corresponding to channels 427 by traversing the portions of the glass substrate sheet where the channels 427 are to be formed with less passes of the laser than portions of the glass substrate sheet where the through holes 425 are to be formed. For example, if X number of laser passes are required to form laser damage regions corresponding to through holes 425, then 0.3X passes may be used to form damage regions corresponding to the channels 427. Subsequently, the same etching process may be used to form the final through holes 425 and channels 427.

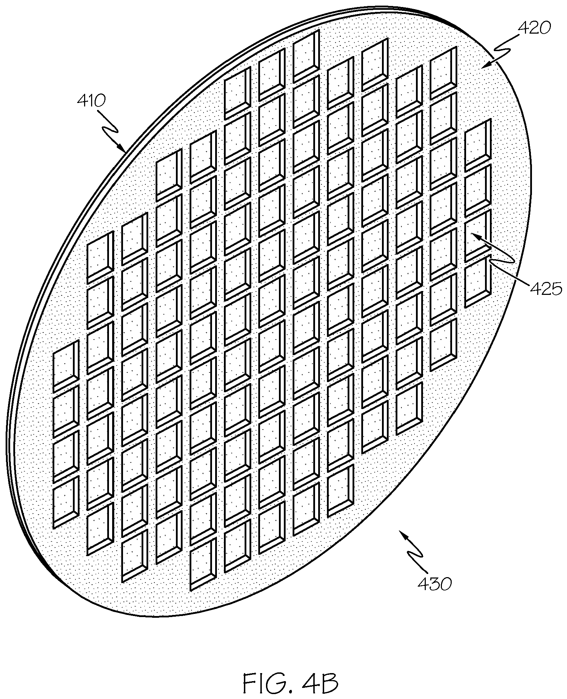

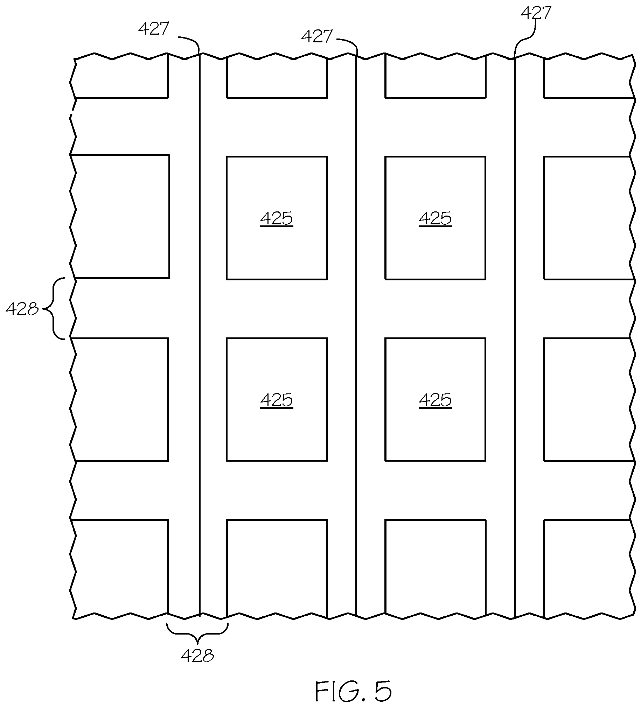

The through holes 425 shown in FIG. 4A are rectangular and correspond to the grid pattern 415 formed on the glass wafer 410 so that the interposer 420 may be adhered to the glass wafer 410 by contacting the interposer 420 with the glass wafer 410, which may comprise an adhesive to form the MEMS holder 430 shown in FIG. 4B. With reference now to FIG. 5, which depicts a magnified view of cut out A from FIG. 4A, in addition to the through holes 425, the interposer may include channels 427. The channels 427 are formed in a side of the interposer that is contacted to the grid pattern 415 of the glass wafer 410 so that when the interposer 420 is contacted to the glass wafer 410, the excess adhesive that forms the grid pattern 415 of the glass wafer 410 is able to fill into the channels 427. Thereby, uniform contact of the glass wafer 410 and the interposer 420 is facilitated while also preventing adhesive from seeping into the through holes 425 of the interposer. For example, in the embodiment shown in FIG. 5, each vertical elongated portion 428 of the interposer 420 has two channels 427 formed with the vertical elongated portion 428 of the interposer 420 so that a channel 427 is between each vertical column of through holes 425. Once the glass wafer 410 and interposer 420 are adhered, as shown in FIG. 4B, MEMS may be inserted into the through holes 425 in the interposer 420 to form a device that is suitable for use in an end product.

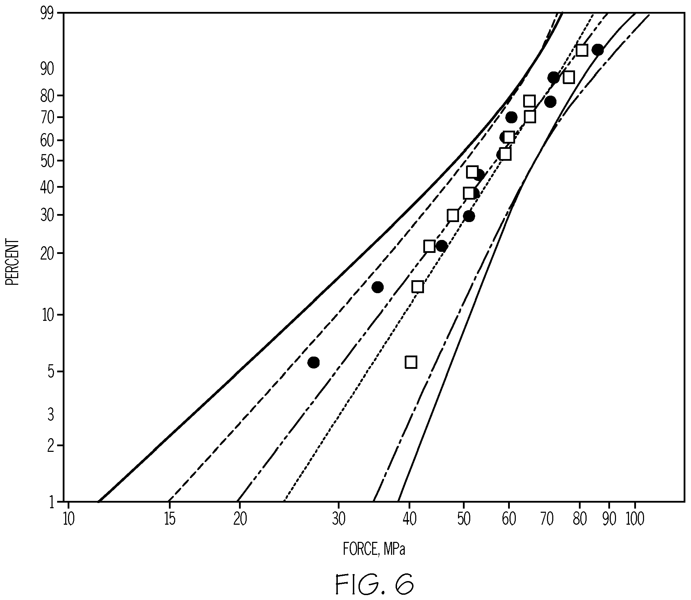

By forming channels 427 in the interposer 420 with the channel dimensions described herein, the presence of the channels does not affect the strength of the interposer. For example, FIG. 6 graphically represents the failure rate (in percentage) of interposers with channels and the failure rate (in percentage) of interposers without channels. The channels depths and widths of the interposers shown in FIG. 6 are all between 30 µm and 100 µm. In FIG. 6, percent failure is provided on the y-axis and force in MPa. Interposers without channels are represented by circles and interposers with channels are represented by squares. As can be seen from the graph of FIG. 6, at low forces, the interposers with channels have a lower failure rate. For example, the interposers having channels have a failure rate of about 5% at about 40 MPa, while the interposers without channels have a failure rate of about 5% at about 27 MPa. At higher forces (e.g., forces above 40 MPa) the interposers with channels and the interposers without channels have comparable failure rates. Accordingly, the strength of the interposers is improved at lower forces by having channels and is not noticeably affected at higher forces by having channels.

In some embodiments, the flat glass substrate sheet comprising holes and/or features formed by the above-described laser damage etching process is used in the end product without further reshaping. However, in other embodiments, discussed in detail below, the laser damage and etching process is conducted on a flat glass substrate sheet to pre-compensate for subsequent shaping of the flat glass substrate sheet into a shaped glass article.

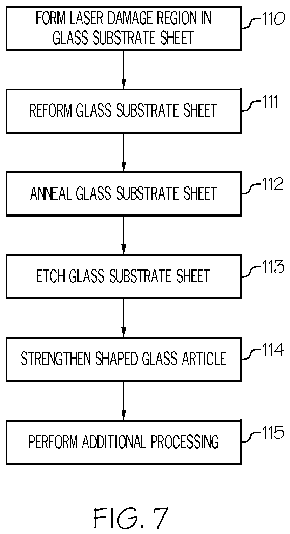

Referring now to FIG. 7, a flowchart of a process to fabricate glass articles from a flat glass substrate sheet by laser damage and chemical etching processes. The flowchart of FIG. 7 will first be described generally, and then each process will be described in more detail. At block 110, a laser is utilized to induce laser damage regions in a flat glass substrate sheet. The laser damage regions extend from a mid-point of the glass substrate sheet to a second surface of the glass substrate sheet, and are defined by laser-induced microcracks, spectroscopic defects, and the like. The laser damage regions are etched compared to the non-damaged regions during the etching process of block 113.

In embodiments, the laser damage regions have an initial geometry that precompensates for the deformation of the flat glass substrate sheet that occurs during the reforming process at block 111 and/or during the etching process 113. Therefore, an initial geometry of a particular laser damage region may be different than a desired geometry of the feature of the shaped glass article. For example, the width and depth of a laser damage region before etching may be less than the width and depth of channel formed from that laser damaged region after etching. In other embodiments, a particular laser damage region intended to provide a channel in the glass article may have an initial geometry comprising a curve; however, following the reforming and/or etching process, the laser damage region changes shape to be a straight line.

At block 111, the flat glass substrate sheet is optionally reformed by a reforming process. The reforming process may be any process capable of three-dimensionally reforming the flat glass substrate sheet to define one or more shaped glass articles. Such reforming processes include, but are not limited to, press molding, gravity sagging, pressure forming, and localized heating and bending. In many applications, the reforming process creates a curved perimeter area of the shaped glass article. A curved perimeter area of a cover glass may be aesthetically pleasing to end-users, for example. As stated above, the initial geometry of the laser damage regions changes to a desired geometry as the glass is reformed into the desired shape. To remove internal stresses developed during the glass substrate sheet fabrication process and/or the reforming process, the shaped glass substrate sheet may then be annealed by an annealing process at block 112. The annealing process may be any known or yet-to-be-developed annealing process.

At block 113, the reformed glass substrate sheet is subjected to an etchant solution to preferentially etch the laser damage regions, while minimally etching the non-damaged regions. The etching removes flakes and smoothes edges of the laser damaged regions without removing a significant amount of the surface layer because the etchant solution etches the laser damage regions much more efficiently than the remaining non-damaged area of the reformed glass substrate sheet. In some embodiments, hydrofluoric acid is the primary etchant of an etchant solution that also includes mineral acids, such as hydrochloric acid, sulfuric acid, and/or nitric acid. As described in more detail above, the etchant solution and etching process may be controlled to reduce the etch time, reduce surface waviness, reduce surface roughness, minimize sludge, and minimize thickness reduction.

Next, at block 114, the separated shaped glass articles may optionally be strengthened by a strengthening process. In some embodiments, the shaped glass articles may be strengthened by an ion-exchange chemical strengthening process. As described in more detail above, ions in a surface layer of the shaped glass articles are replaced by larger ions having the same valence or oxidation state, thereby forming a compressive surface layer on each surface of the shaped glass articles. The compressive surface layers may resist scratching and provide additional strength to the shaped glass articles.

At block 115, additional processing may be applied to the strengthened shaped glass articles, such as edge finishing, application of touch-sensitive layers (e.g., indium tin oxide layers), antireflective layers, and the like.

It should now be understood that embodiments described herein are directed to methods of fabricating channels in glass articles from a flat glass substrate sheet using laser damage and chemical etching processes. Laser damage regions are formed within a flat glass substrate sheet to form channels in the one or more desired glass articles. The flat glass substrate sheet may be reformed to achieve the desired three-dimensional shape of the one or more glass articles. The laser damage regions are formed with an initial geometry that precompensates for the changing shape of the flat glass substrate sheet during the reforming process such that laser damage regions have a desired geometry after the reforming process. During etching, the laser damage regions are preferentially etched over non-damaged regions when the glass substrate sheet is subjected to an etchant solution. Compared with CNC machining, selective etching of laser damage regions results in smaller and more precisely shaped channels.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

## Claims

1. A method of forming a glass article, comprising:
providing a glass substrate sheet;
translating a pulsed laser beam on the glass substrate sheet to form a laser damage region extending from a surface of the glass substrate sheet to a mid-point of the glass substrate sheet; and
contacting the glass substrate sheet with an etchant solution,
wherein after the contacting of the glass substrate sheet with the etchant solution, the laser damage regions form channels having width and depth dimensions of less than 150 µm, whereby a channel is a depression in one surface of the glass substrate sheet that does not penetrate to the other surface of the glass substrate sheet and wherein
the glass substrate sheet is strengthened before the pulsed laser beam is translated on the glass substrate sheet, and wherein the pulsed laser has a power of from 0.1W to 0.4W, or
the glass substrate sheet is strengthened after the pulsed laser beam is translated on the glass substrate sheet, and wherein the pulsed laser has a power of from 0.4W to 0.6W.

2. The method of claim 1, wherein the channels have a width from 25 µm to 125 µm, and the channels have a depth from 25 µm to 125 µm.

3. The method of any one of claims 1 and 2, further comprising chemically strengthening the glass substrate sheet.

4. The method of any one of claims 1 to 3, wherein an acid-resistant coating is applied to the glass substrate sheet before the pulsed laser beam is translated on the glass substrate sheet, and
the acid-resistant coating is removed from the glass substrate sheet after the etchant solution is applied to the glass substrate sheet.

5. The method of any one of claims 1 to 4, wherein the laser damage region does not contact an edge of the glass substrate sheet.

6. The method of any one of claims 1 to 5, wherein contacting the etchant solution to the glass substrate sheet comprises spraying the glass substrate sheet with the etchant solution.

7. The method of any one of claims 1 to 6, wherein contacting the etchant solution to the glass substrate sheet comprises submerging the glass substrate sheet in a bath of the etchant solution,
a temperature of the bath of the etchant solution is less than 30°C, and
the bath of the etchant solution is agitated at an ultrasonic agitation frequency of 40 kHz until a portion of the glass substrate sheet about the laser damage region is substantially removed, thereby forming the glass article.

## Patentansprüche

1. Verfahren zum Herstellen eines Glasgegenstands, umfassend:
Bereitstellen einer Glassubstratplatte;
Bewegen eines gepulsten Laserstrahls über die Glassubstratplatte, um einen Laserschadensbereich auszubilden, der sich von einer Oberfläche der Glassubstratplatte zu einem Mittelpunkt der Glassubstratplatte erstreckt; und
Inberührungbringen der Glassubstratplatte mit einer Ätzmittellösung, wobei nach dem Inberührungbringen der Glassubstratplatte mit der Ätzmittellösung die Laserschadensbereiche Kanäle mit Breiten- und Tiefenabmessungen von weniger als 150 µm ausbilden, wobei ein Kanal eine Vertiefung in einer Oberfläche der Glassubstratplatte ist, die die andere Oberfläche der Glassubstratplatte nicht durchdringt, und wobei
die Glassubstratplatte getempert wird, bevor der gepulste Laserstrahl über die Glassubstratplatte bewegt wird, und wobei der gepulste Laser eine Leistung von 0,1 W bis 0,4 W aufweist, oder die Glassubstratplatte getempert wird, nachdem der gepulste Laserstrahl auf die Glassubstratplatte bewegt wurde, und wobei der gepulste Laser eine Leistung von 0,4 W bis 0,6 W aufweist.

2. Verfahren nach Anspruch 1, wobei die Kanäle eine Breite von 25 µm bis 125 µm aufweisen und die Kanäle eine Tiefe von 25 µm bis 125 µm aufweisen.

3. Verfahren nach einem der Ansprüche 1 und 2, ferner umfassend ein chemisches Tempern der Glassubstratplatte.

4. Verfahren nach einem der Ansprüche 1 bis 3, wobei eine säurebeständige Beschichtung auf die Glassubstratplatte aufgebracht wird, bevor der gepulste Laserstrahl über die Glassubstratplatte bewegt wird, und
die säurebeständige Beschichtung von der Glassubstratplatte entfernt wird, nachdem die Ätzmittellösung auf die Glassubstratplatte aufgetragen wurde.

5. Verfahren nach einem der Ansprüche 1 bis 4, wobei der Laserschadensbereich keine Kante der Glassubstratplatte berührt.

6. Verfahren nach einem der Ansprüche 1 bis 5, wobei das Inberührungbringen der Ätzmittellösung mit der Glassubstratplatte ein Besprühen der Glassubstratplatte mit der Ätzmittellösung umfasst.

7. Verfahren nach einem der Ansprüche 1 bis 6, wobei das Inberührungbringen der Ätzmittellösung mit der Glassubstratplatte ein Eintauchen der Glassubstratplatte in ein Bad der Ätzmittellösung umfasst,
eine Temperatur des Bads der Ätzmittellösung weniger als 30 °C beträgt, und
das Bad der Ätzmittellösung bei einer Ultraschall-Erregungsfrequenz von 40 kHz erregt wird, bis ein Abschnitt der Glassubstratplatte um den Laserschadensbereich im Wesentlichen entfernt ist, wodurch der Glasgegenstand hergestellt wird.

## Revendications

1. Procédé de formation d'un article en verre, comprenant : la fourniture d'une feuille de substrat en verre ;
la translation d'un faisceau laser pulsé sur la feuille de substrat en verre pour former une zone de détérioration par laser s'étendant à partir d'une surface de la feuille de substrat en verre jusqu'à un point médian de la feuille de substrat en verre ; et
la mise en contact la feuille de substrat en verre avec une solution de gravure chimique, après la mise en contact de la feuille de substrat en verre avec la solution de gravure chimique, lesdites zones de détérioration laser formant des canaux possédant des dimensions de largeur et de profondeur inférieures à 150 µm, un canal étant une dépression dans une surface de la feuille de substrat en verre qui ne pénètre pas sur l'autre surface de la feuille de substrat en verre et
ladite feuille de substrat en verre étant renforcée avant que le faisceau laser pulsé ne soit translaté sur la feuille de substrat en verre, et ledit laser pulsé possédant une puissance allant de 0,1 W à 0,4 W, ou ladite feuille de substrat en verre étant renforcée après la translation du faisceau laser pulsé sur la feuille de substrat en verre, et ledit laser pulsé possédant une puissance allant de 0,4 W à 0,6 W.

2. Procédé selon la revendication 1, lesdits canaux possédant une largeur allant de 25 µm à 125 µm, et lesdits canaux possédant une profondeur allant de 25 µm à 125 µm.

3. Procédé selon l'une quelconque des revendications 1 et 2, comprenant en outre le renforcement chimique de la feuille de substrat en verre.

4. Procédé selon l'une quelconque des revendications 1 à 3, un revêtement résistant aux acides est appliqué à la feuille de substrat en verre avant que le faisceau laser pulsé ne soit translaté sur la feuille de substrat en verre, et
ledit revêtement résistant aux acides étant retiré de la feuille de substrat en verre après l'application de la solution de gravure chimique à la feuille de substrat en verre.

5. Procédé selon l'une quelconque des revendications 1 à 4, ladite zone de détérioration laser n'entrant pas en contact avec un bord de la feuille de substrat en verre.

6. Procédé selon l'une quelconque des revendications 1 à 5, ladite mise en contact de la solution de gravure chimique avec la feuille de substrat en verre comprenant la pulvérisation de la feuille de substrat en verre avec la solution de gravure chimique.

7. Procédé selon l'une quelconque des revendications 1 à 6, ladite mise en contact de la solution de gravure chimique avec la feuille de substrat en verre comprenant l'immersion de la feuille de substrat de verre dans un bain de la solution de gravure chimique,
une température du bain de la solution de gravure chimique étant inférieure à 30°C, et ledit bain de la solution de gravure chimique étant agité à une fréquence d'agitation ultrasonique de 40 kHz jusqu'à ce qu'une partie de la feuille de substrat en verre autour de la zone de détérioration laser soit sensiblement enlevée, formant ainsi l'article en verre.
